# EUROPEAN PATENT SPECIFICATION

(11) **EP 3 921 938 B1**
(45) Date of publication and mention of the grant of the patent: **03.04.2024**
(21) Application number: 20704102.1
(22) Date of filing: 04.02.2020
(51) Int. Cl.: H02S 20/10

(54) **SOLAR PANEL SUPPORT BRACKET AND METHOD FOR SUPPORTING A SOLAR PANEL**
SOLARPANEELTRÄGER UND VERFAHREN ZUM STÜTZEN EINES SOLARPANEELS
SUPPORT DE PANNEAU SOLAIRE ET PROCÉDÉ DE SUPPORT D'UN PANNEAU SOLAIRE

(30) Priority: 04.02.2019 NL 2022505
(43) Date of publication of application: 15.12.2021
(73) Proprietor: Esdec B.V., 7418 EE Deventer (NL)
(72) Inventor: VAN REGTEREN, Frank, 7418 EE Deventer (NL); DE GRAAF, Jan-Floris, 7418 EE Deventer (NL)
(74) Representative: Patentwerk B.V.
(86) International application number: PCT/NL2020/050060
(87) International publication number: WO 2020/162746

(56) References cited:
- EP-A1- 2 146 160
- EP-A2- 2 080 965
- WO-A2-2006/101392
- WO-A2-2012/031286
- CN-U- 204 349 866
- DE-A1-102009 019 548
- FR-A1- 3 032 263
- US-A1- 2013 298 968
- US-A1- 2018 187 411
- US-B1- 9 893 677
- US-S1- D 671 885

## Description

The invention relates to a solar panel support bracket for supporting a solar panel on a substantially flat mounting surface, in particular a roof. The invention further relates to an assembly of a solar panel and such a support bracket as well as a method for supporting a solar panel with such a support bracket.

Solar panels see application on both pitched mounting surfaces such as pitched roofs, and substantially flat mounting surfaces including flat roofs or slightly inclined roofs, as well as flat or slightly inclined (ground) surfaces. Legislation often prescribes a size limitation for solar panels installed on pitched roofs for the purpose of installation safety. However, such limitations commonly do not apply for the installation of solar panels on flat mounting surfaces. In the latter case, solar panels can thus be given relatively large dimensions, effectively increasing the surface area occupied by the solar cells and thus the energy generating capacity of the solar panels.

Large dimension solar panels are however more prone to bend or to be stressed otherwise under their own weight or the weight of an external load. Important external loads that the solar panel as well as the support structure supporting the solar panel on the mounting surface need to endure include wind loads and, in areas known for (heavy) snow fall, snow load due to the settling of snow on the solar panel. An increase in the load bearing capacity of the support structure however often goes at the expense of ease of installation, which is especially unwanted given the fact that solar panels prices continue to decline and labour costs therefore form an increasingly important share of the total costs for solar panel installation. Moreover, designing the support structure for withstanding snow loads leads to support structure that is over-engineered and/or over-dimensioned for use in snow free areas.

Documents WO2012031286 A2 and DE102009019548 A1 disclose solar panel supports for supporting a solar panel, where edges of the solar panel are engaged by clamping elements.

It is therefore an object of the present invention to provide a support solution for a solar panel offering ease of installation while at the same time being able to provide the solar panel with the support necessary to withstand varying load scenarios without being over-engineered and/or over-dimensioned for nominal use.

The invention hereto provides a solar panel support bracket as defined by the subject-matter of claim 1 for supporting a solar panel on a substantially flat mounting surface, in particular a roof, comprising: (i) an elongated frame extending in a direction of elongation between a first end portion and a second end portion thereof, which frame is configured for transferring a part of the weight of the solar panel onto the mounting surface, and which frame comprises at least one carrying surface for supporting at least a part of the solar panel; (ii) at least one first clamping element connected to a first end portion of the frame, which first clamping element comprises a first engaging surface for, preferably clampingly, engaging on a first edge of the solar panel, and (iii), at least one second clamping element connected to a second end portion of the frame, which second clamping element comprises a second engaging surface for, preferably clampingly, engaging a second edge of the solar panel opposing the first edge of the solar panel, wherein the first clamping element and the second clamping element are displaceable relative to each other in the direction of elongation of the frame, to adjust the distance between the first engaging surface and the second engaging surface, preferably such that a clamping force is exerted by each clamping element on an edge of the solar panel. In the solar bracket according to the invention, the first engaging surface and the second engaging surface face away from each other in mutually opposing directions, for engaging an inward facing side of the first edge of the solar panel respectively an inward facing side of the second edge of the solar panel.

Solar panels typically comprise an array of photovoltaic (PV) cells, commonly sandwiched between a top (glass) layer and a backing layer, which assembly of PV cells, top layer and backing layer are surrounded by a (solar panel) frame, constituting the edge of the solar panel. Any edge part of the solar panel mentioned in the present application is thus typically part of the solar panel frame. With the support bracket according to the invention, preferably each clamping element is configured to engage an inner surface of the solar panel frame, more preferably an inner surface of a lower part (lower edge) of the solar panel frame positioned below underneath the PV cells. This allows the solar panels to be fastened blindly to the support bracket, which is not only attractive from an aesthetical point of view, but allows solar panels to be positioned tightly adjacent to each other, which may lead to a considerable saving of space, which is advantageous from a practical and economical point of view.

Non-limitative examples of solar panel related equipment, which may - instead of at least one solar panel or in addition to at least one solar panel - be supported by the support bracket according to the invention, are components like electrical inverters, DC/AC disconnects, meters, wiring, racking, further support structures for one or more components, charge controllers, batteries, additional system balances. Alternatively, the support bracket according to the invention may also be used to support solar collectors (solar hot water panels) and/or components which may or may not be solar panel or solar collector related.

Within the scope of the present invention, flat mounting surfaces include plane (horizontal) surfaces or (slightly) inclined (diagonal) or profiled surfaces, such as roof surfaces, wall surfaces (vertical surfaces) or ground surfaces.

The elongated frame fulfils at least two important functions, being the transfer of loads between the solar panel and the mounting surface and providing a structure for engagement by the first and second clamping elements. The main transfer of the weight of the solar panel hereby takes place via the at least one carrying surface, which for this purpose typically extends in a plane parallel to the (rear side of the) solar panel. The frame may be made of a metal or a composite material that provides the frame with the necessary strength and rigidity that allow the support bracket to fulfil its support function. Preferably, a lightweight metal such as aluminium, or a lightweight composite such as a fibre-reinforced plastic is used to bring down the weight of the support bracket, facilitating handling of the support bracket. The frame may be positioned loosely on the mounting surface, although it is also possible that the frame will be fixed to the mounting surface, for example by using an adhesive and/or mechanical fixing elements, such as screws. Instead of an elongated frame, it is also conceivable to apply another frame (design) which is configured to be supported by a mounting surface. Here, it is also imaginable that the frame is configured to be coupled, preferably releasably and/or by using a snap connection, to another support structure, like e.g. a mounting rail or another frame. Typically, the end portions of the frame are configured to co-act with the clamping elements. However, it should be understood that the end portion do not necessarily delimit an outer end and/or the boundaries of the frame, and that it is conceivable that the frame extends beyond said end portions. Hence, this term "end portion" should be interpreted rather broadly, although, in practice, it will often be the case that clamping elements actually co-act with the physical (real) end portions of the frame.

Fixation of the solar panel to the support bracket is realised by the clamping action of the clamping elements. Through the displacement of the clamping elements relative to each other, typically in a direction away from each other, the engaging surfaces on one side and the edges of the solar panel on the other side are moved towards each other up to the point where the engaging surfaces each contact another one of two opposing edge of the solar panel. The engaging surfaces hereby exert a clamping force on the edges of the solar panel, retaining the solar panel between the clamping elements. Actually, due to this clamping action, an edge of the solar panel is typically clamped in between the clamping element and the frame. The engaging surfaces are typically shaped to form fit the shape of the edge of the solar with which the engaging surface make contact. At least one of the engaging surface may for example be shaped as a hook to follow and grab the inside of a solar panel frame. With the use of the clamping elements, no fasteners or other connection means are necessary to fix the solar panel to the support bracket, saving valuable installation time. Typically, both clamping elements are displaceable with respect to the frame, but it is also conceivable that only one (mobile) clamping element (type) is displaceable with respect to the frame, while the other (stationary) clamping element (type) is connected rigidly to the frame. In this latter embodiment, the stationary clamping element may be integrally connected with the frame. Here in this embodiment, displacement of the mobile clamping element not only leads to clamping of the solar panel by said mobile clamping element, but also leads to forcing the solar panel to move towards and/or into the stationary clamping element, such that the stationary clamping element is forced to clamp the solar panel as well.

The support bracket may be used as a stand-alone solution for mounting a solar panel or the like to a mounting surface, in which case one or more of such support brackets are clamped onto the solar panel, wherein the assembly of solar panel and support bracket(s) is positioned, and possibly fixed, on the mounting surface. Alternatively, the support bracket may be used in addition to a standard mounting structures or systems to prevent excessive bending of the solar panel in the event of (heavy) snowfall. Where mounting structures commonly only engage the corners of the solar panel, the support bracket may support the solar panel along its length, effectively reducing deflection of the solar panel due to bending under a snow load.

In the support bracket according to the invention the first engaging surface and the second engaging surface face away from each other in mutually opposing directions, for engaging an inward facing side of the first edge of the solar panel respectively an inward facing side of the second edge of the solar panel. Said inward facing sides of the first and second edges of the solar panel are hereby typically formed by an inside portion of the solar panel frame surrounding the solar panel. By clamping the solar panel on an inner side of the opposing edges, the support bracket can be designed to have substantially no parts protruding past the edges of the solar panel, as seen from a top view. This leads to improved aerodynamic properties of the installed assembly of solar panel and support bracket. Moreover, the fact that no parts of the support bracket protrudes past the sides of the solar panel benefits the safety of persons walking immediately past the mounted solar panels and may be regarded as more aesthetically pleasing. More still, the lack of protruding parts makes that the support bracket does not interfere with part of a mounting system used in addition to the support bracket, making the support bracket compatible with practically all conventional mounting systems for solar panels.

The first end portion may comprise an abutment surface for being abutted against by the first edge of the solar panel, which abutment surface extends in a plane substantially perpendicular to the carrying surface and faces the first engaging surface of the first clamping element. In particular, the abutment surface may be configured for being abutted against by an outward facing side of the first edge of the solar panel, wherein the inward facing side of the first edge of the solar panel can then be engaged by the first engaging surface. By positioning the solar panel with its first edge against the abutment surface, the position of the solar panel relative to the frame is known in at least the direction of elongation of the frame. The abutment surface thus serves to outline the solar panel relative to the support bracket, and thus the carrying surface(s) of the frame and the clamping elements in a fast and reliable manner.

At least one of the first clamping element and the second clamping element may be provided with an adjustable retention element for fixating (securing) the clamping element relative to the frame in at least one or multiple preferred positions, more preferably in a number of different positions mutually shifted in the direction of elongation of the frame. The adjustable retention element hereby makes it possible to clamp solar panels of different sizes between the first and second clamping elements and secure them to the frame and thus the support bracket.

In a possible embodiment, the retention element may be embodied by a threaded fastener, such as a bolt or a screw, engaging the clamping element on one hand and the frame on the other. The position of the clamping element relative to the frame may then be adjusted through a turning motion of the threaded fastener. Alternatively, the retention element may comprise a toothed edge and/or a toothed profile, such as a saw tooth profile, configured for engaging a part of the frame. More preferably, the retention element is formed by a strip which is provided with a profiled lower surface. This profiled lower surface may e.g. be formed by a saw tooth profile. One end of the strip is connected to the clamping element, while an opposite end of the strip constitutes a free end portion, which is typically (also) configured to be engaged by a user, during installation and uninstallation. By sliding the toothed edge of the retention element along the frame part in the direction of elongation of the frame, one of the teeth locks behind the frame, retaining the retention element and therewith the clamping element in a certain position relative to the frame. The specific position of the clamping element relative to the frame is hereby dependent on the specific tooth through with the engagement of the retention element on the frame is realised.

The retention element may be resiliently connected to the clamping element for being resiliently pressed against a part of the frame. This ensures that the retention elements is urged towards a position wherein the retention element (clampingly) engages the frame and the clamping element remains fixed with relation to the frame. In order to disengage the retention element from the frame and therewith enabling repositioning of the clamping element to the frame and/or removal of the clamping element from the frame, a force must be exerted onto the retention element to displace the retention element under further deformation of the resilient connection between the retention element and the clamping element. The retention element is preferably resiliently pressed against a part of the frame in a direction away from the clamping element. This causes the clamping element to be urged away from the retention element when the retention element engages the frame. The clamping element may hereby be forced against a part of the frame opposing the part of the frame engaged by the retention element. Disengagement of the retention element from the frame hereby involves a convenient pinching action, wherein the retention element is moved towards the clamping element. This pinching action may be facilitate by providing the resilient retention element (retention strip) more length to increase the physical moment of force exerted by a user onto (an end portion of) the retention element (retention strip). To this end, the length of the retention element is preferably at least 3 centimetre, more preferably at least 5 centimetre. The retention element may however also be resiliently pressed against a part of the frame in a direction towards the clamping element.

Preferably, each clamping element is made of plastic, and/or a lightweight composite such as a fibre-reinforced plastic, and/or a lightweight metal such as aluminium. In case a retention element, preferably a resilient retention element, is applied, the retention element is preferably made in one piece with the clamping element. Manufacturing such a clamping element provided with an integrally connected retention element can e.g. be realized by injection moulding.

It is imaginable that at least one clamping element is configured for simultaneously clamping, and hence securing (locking), a plurality of solar panels and/or at least one solar panel and at least one other component to the frame.

It is imaginable that the support bracket according to the invention comprises a single clamping element (type), either at least one first clamping element or at least one second clamping element. In this particular embodiment, typically only one solar panel edge is clamped during installation of the solar panel, while an opposing solar panel edge will not be clamped by a clamping element. This latter mentioned opposite solar panel edge may be lie loosely onto the frame and/or may be accommodated in at least one receiving space of the frame, which may improve that stabilization of the solar panel with respect to the frame, and/or may be fixated with respect to the frame by an adhesive and/or by using of or more mechanical fastening elements, such as screws.

As mentioned above, at least one clamping element is displaceable with respect to the frame between an unclamped state and a clamped state, wherein a clamping force exerted by said clamping element onto said edge of the solar panel is higher in the clamped state compared to the unclamped state. Typically, in the unclamped state, the clamping element does not exert any or at least not a considerable clamping force on the solar panel, while in the clamped state, the clamping element exerts a clamping force on the solar panel such that the solar panel is clamped (secured) in between the clamping element and the frame. In the unclamped state, the solar panel can easily be positioned on the frame and removed from frame.

At least one of the first end portion and the second end portion may be provided with a slit extending in the direction of elongation of the frame, wherein at least one of the first clamping element and the second clamping element is partially received in said slit and guidable along said slit. To this latter end, at least one of the first clamping element and second clamping elements is provided with guiding elements, such as guiding grooves, positioned at opposing sides of the clamping element and configured to accommodate opposing frame parts defining said slit. This makes it possible to slide the clamping element over slit edges, wherein the play (freedom of movement) in a direction perpendicular to the sliding direction will be restricted, which will improve a stable positioning of the clamping element onto the frame, and which hence improve the stability of the support bracket as such.

Through the use of said slit, the displacement of the clamping element is bounded by the slit. In a common instance, the clamping element engages both sides of the frame connected by the slit, effectively limiting the freedom of movement of said clamping element to the direction of elongation of the frame. This allows for a controlled displacement of the clamping element and therewith a controlled clamping of the solar panel between the first and second engaging surfaces.

In a possible embodiment of the support bracket according to the invention, the support bracket may comprise at least one support surface for supporting the frame on the mounting surface. In a typical instance, the support bracket comprises multiple support surfaces mutually spaced apart to provide the support bracket with a stable support base. The at least one support surface may form part of the elongated frame, and in particular a side of the frame facing away from the carrying surface, wherein the frame is directly supported on the mounting surface.

The at least one support surface may however also be formed by a separate support member connected to the frame and configured for attachment to the mounting surface. The support member may be provided with attachment means such as mounting holes for the pass-through of fasteners connecting the support member and therewith the support bracket to the mounting surface. One of the benefits of utilizing one or more separate support members is that the frame, which is commonly made from a thermally conductive metal such as steel or aluminium, can be thermally decoupled from the mounting surface. The support member(s) is for this purpose commonly manufactured from a thermally insulating material such as a plastic, and more in particular a (ethylene propylene diene monomer) rubber. Another benefit of using a separate support member is that at least one of the support members may be moveable relative to the frame. This allows the frame to move relative to the mounting surface to compensate for thermal expansion of the solar panel. The support member(s) may particularly be moveable relative to the frame in at least a direction perpendicular to the direction of elongation of the frame to permit movement of the frame relative to the mounting surface in a lengthwise direction of the solar panel.

The first end portion, the second end portion, the at least one carrying surface and the at least one support surface may form part of a single beam or single piece. The beam may hereto be bended at several locations to stretch out between at least a part of the distance between the mounted solar panel and the mounting surface. The use of a single beam considerably simplifies the construction of the support bracket and moreover benefits the structural integrity of the frame. Typically, the beam comprises two upstanding (vertically or diagonally oriented) beam legs, wherein a first beam leg is connected to and supporting the first end portion, and wherein an opposing second beam leg is connected to and supporting the second end portion. Typically, the first beam leg and the second beam leg have a mutually diverging orientation in upward direction. Preferably, a plane defined by the first end portion is substantially parallel to and/or coincides with a plane defined by the second end portion. Typically, the length of the second beam leg exceeds the length of the first beam leg. Typically, the second end portion is positioned at a higher level compared to the first end portion, which will result in an inclined orientation of the solar panel, in particular in case the support bracket is positioned on top of a horizontal mounting surface. Alternative configurations, dependent on the specific application of the support bracket, are also imaginable. The at least one carrying surface may lie at an acute angle relative to the at least one support surface. As the solar panel is supported at a rear side thereof on the carrying surface(s), the angle of the carrying surface(s) relative to the support surface cause the solar panel to be mounted on the mounting surface at an angle relative to the mounting surface.

The frame may be extendable in its direction of elongation, wherein the distance between the first end portion of the frame and the second end portion of the frame is adjustable. This adjustability of the frame length may be accomplished through various adjusting mechanisms, which may comprise a telescoping structure, the telescoping parts of which may be mutually fixed at various positions along the direction of elongation of the frame. The extendable frame allows the frame length to be adapted to the dimensions of the solar panel to be mounted thereon. It can herewith be ensured that the edges of the solar panel fall within the range over which the clamping elements can be displaced relative to each other, such that two of the opposing edges of the solar panel can be engaged by the engaging surfaces and thus clamped between the clamping elements.

To improve the stiffness of the frame, the frame may comprise at least one raised edge extending in the direction of elongation of the frame. In a common instance, the frame comprise two raised edges, provided at opposing longitudinal sides of the frame. Said raised edge(s) may further more run over substantially the entire length of the frame.

To prevent the support bracket and the therewith connected solar panel to be lifted off the mounting surface, for example under the influence of wind forces, the frame may be provided with at least one ballast element to weight down the support bracket. The at least one ballast element may hereto be provided on a part of the frame close to the mounting surface to lower the centre of gravity of the assembly of support bracket and solar panel. Heavy objects such as bricks or gravel are highly suitable for use as ballast elements.

It is further conceivable that at least one clamping element is configured for double-sided engagement of at least part of the frame, in particular of an end portion of said frame. Herewith, a relatively stable positioning of the clamping element with respect to the frame can be obtained.

The invention further relates to a clamping element for application in a support bracket according to the invention. The invention also relates to a frame, in particular an elongated frame for application in a support bracket according to the invention. The features and benefits of both components are already elucidated in the foregoing.

The invention moreover relates to an assembly of a solar panel and at least one support bracket according to the invention. With the assembly of the solar panel and at least one support bracket, the solar panel can be easily installed on a substantially flat mounting surface such as a roof, wherein the solar panel is supported by the support bracket, typically at an angle with the mounting surface. The support bracket may in a typical use case be installed in addition to a mounting structure for mounting the solar panel on a mounting surface to offer additional support when needed, for example in the event of (heavy) snowfall wherein excessive bending of the solar panel is prevented by the support bracket. In this instance, the assembly further comprises a mounting structure for mounting the solar panel on a substantially flat mounting surface.

The invention furthermore relates to a method for supporting a solar panel with a support bracket, in particular a support bracket according to the invention, comprising the steps of: A) positioning the support bracket against the rear side of the solar panel, wherein the carrying surface of the elongated frame at least partly supports the solar panel, B) displacing the first clamping element and the second clamping element relative to each other up to a point where the first engaging surface engages on a first edge of the solar panel and the second engaging surface engages on a second edge of the solar panel opposing the first edge of the solar panel. The method may comprise step C) formed by the step of positioning the solar panel with the support bracket onto a substantially flat mounting surface, in particular a roof. In case step C) is applied, step C) may be executed either prior to or after step A). Step C), if applied, may also be executed either prior to or after step B).

It may also be possible to first position the support bracket onto a substantially flat mounting surface, in particular a roof, after which the solar panel is with a rear side positioned against the support bracket such that the carrying surface of the elongated frame at least partly supports the solar panel, followed by step B) of displacing the first clamping element and the second clamping element relative to each other up to a point where the first engaging surface engages on a first edge of the solar panel and the second engaging surface engages on a second edge of the solar panel opposing the first edge of the solar panel.

With one of the above methods, the solar panel is supported by the support bracket while being clampingly engaged by the first and second clamping elements, and in particular the first and second engaging surfaces such that the solar panel is fixated relative to the support bracket. The amount of actions necessary to install the support bracket are, due to the use of the clamping action of the clamping elements, reduced to a minimum. The clamping elements may moreover be designed to allow for a tool-free installation of the support bracket for supporting the solar panel.

During step B) the distance between the first engaging surface and the second engaging surface may be increased, wherein the first and second engaging surfaces engage an inward facing side of the first edge of the solar panel respectively an inward facing side of the second edge of the solar panel.

During step A) the support bracket may be positioned against the rear side of the solar panel such that an outward facing side of the first edge of the solar panel abuts an abutment surface provided on a first end portion of the frame. By positioning the solar panel with its first edge against the abutment surface, the position of the solar panel relative to the frame is known in at least the direction of elongation of the frame. The abutment surface thus serves to outline the solar panel relative to the support bracket, and thus the carrying surface(s) of the frame and the clamping elements in a fast and reliable manner.

Before step A) the distance between the first end portion of the frame and the second end portion of the frame may be adjusted to the dimensions of the solar panel. Adjustment of the distance between the first end portion of the frame and the second end portion of the frame hereby typically takes place by means of an adjusting mechanism capable of setting and fixating the length of the elongated frame at various predetermined positions.

As described above, the invention also relates to a solar panel support bracket for supporting a solar panel and/or solar panel related equipment, preferably on a substantially flat mounting surface, in particular a roof, comprising: a frame, preferably an elongated frame extending in a direction of elongation between a first end portion and a second end portion thereof, which frame is configured for transferring a part of the weight of the solar panel onto the mounting surface, and which frame comprises at least one carrying surface for supporting at least a part of the solar panel and at least one first clamping element connected or connectable to the frame, preferably to a first end portion of the frame, which first clamping element comprises a first engaging surface for, preferably clampingly, engaging on a first edge of the solar panel, wherein at least one clamping element, preferably at least one first clamping element, is configured to displaceably co-act with the frame, such that said clamping element is displaceable with respect to the frame between an unclamped state and a clamped state, wherein a clamping force exerted by said clamping element onto said edge of the solar panel is higher in the clamped state compared to the unclamped state. It is conceivable that the second end portion of the solar panel support bracket comprises at least one fixing element. The fixing element can possibly be configured for fixingly connecting a solar panel and/or solar panel related equipment to the second end portion of the solar panel support bracket. A non-limiting examples of such fixing element is a screw-connection. It is also conceivable that the fixing element is formed by a protruding edge behind which part of the solar panel can be hooked.

The invention will be further elucidated below on the basis of the non-limitative exemplary embodiments shown in the following figures. Herein shows:
- figure 1a an exploded view of a solar panel support bracket according to the invention;
- figure 1b the support bracket as shown in figure 1a in an assembled situation;
- figure 2a an assembly of a solar panel and the support bracket as shown in figures 1a and 1b;
- figure 2b the assembly as shown in figure 2a wherein the support bracket is clampingly connected to the solar panel;
- figures 3a and 3b a perspective view of a support bracket according to the invention positioned in a solar panel system;
- figures 4a and 4b detailed embodiments of the clamping elements as shown in figures 1a-3b; and
- figures 5a-c further possible embodiments of clamping elements according to the present invention.

Similar references in these figures correspond to similar or equivalent features or elements.

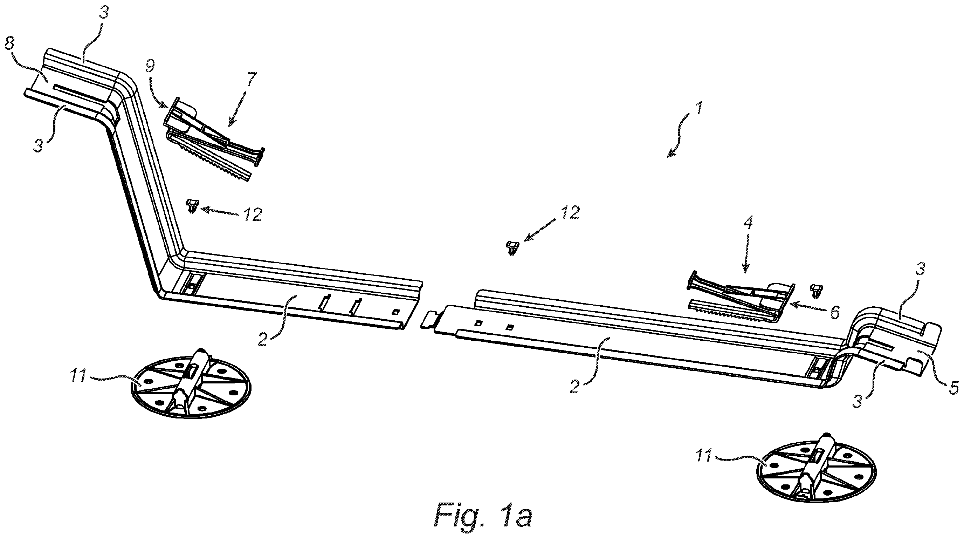

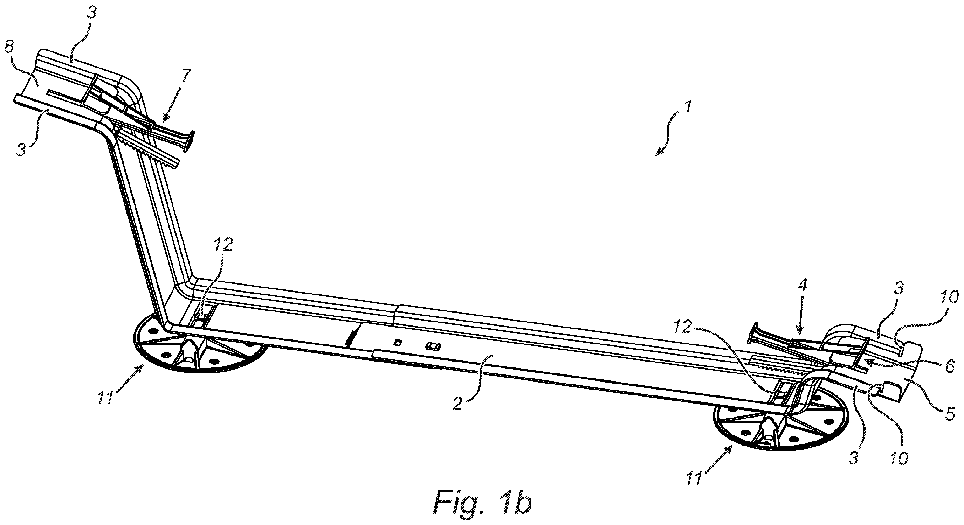

Figure 1a shows an exploded view of a possible embodiment of a solar panel support bracket (1) according to the present invention. Figure 1b shows the support bracket (1) as shown in figure 1a in an assembled condition. The solar panel support bracket (1) is configured for supporting a solar panel (not shown) on a substantially flat mounting surface, in particular a roof. The support bracket (1) comprises an elongated frame (2) for transferring a part of the weight of the solar panel onto the mounting surface. The frame (2) comprises multiple carrying surfaces (3) for supporting at least a part of the solar panel. The support bracket (1) furthermore comprises a first clamping element (4) connected to a first end portion (5) of the frame (2), which first clamping element (4) comprises a first engaging surface (6) for engaging on a first edge of the solar panel. The support bracket (1) also comprises a second clamping element (7) connected to a second end portion (8) of the frame (2), which second clamping element (7) comprises a second engaging surface (9) for engaging a second edge of the solar panel opposing the first edge of the solar panel. The first clamping element (4) and the second clamping element (7) are displaceable relative to each other in a direction of elongation of the frame (2) to adjust the distance between the first engaging surface (6) and the second engaging surface (8). The first end portion (5) of the frame (2) comprises an abutment surface (10) for being abutted against by an outward facing side of the first edge of the solar panel. The abutment surface (10) extends in a plane substantially perpendicular to the carrying surface (3) and faces the first engaging surface (6) of the first clamping element (4). The abutment surface (10) is in de shown embodiment formed by a plurality of protruding elements which form integral part of the frame (2). The frame (2) is extendable in its direction of elongation, due to the frame (2) comprises to co-acting frame parts such that the distance between the first end portion (5) of the frame (2) and the second end portion (8) of the frame (2) is adjustable. The frame (2) furthermore comprises a raised edge extending in the direction of elongation of the frame, which contributes to the strength of the frame (2). In the shown embodiment comprises the support bracket (1) a support surface (11) for supporting the frame (2) on the mounting surface. The support surface (11) is formed by two support members (11) connected via connection element (12) to the frame (2) and configured for attachment to the mounting surface. The shown, non-limiting, embodiments of the support members (11) are moveable relative to the frame (2) in a direction perpendicular to the direction of elongation of the frame (2), providing a good thermal decoupling. It is however, also possible that the support surface(s) (11) forms integral part of the frame (2).

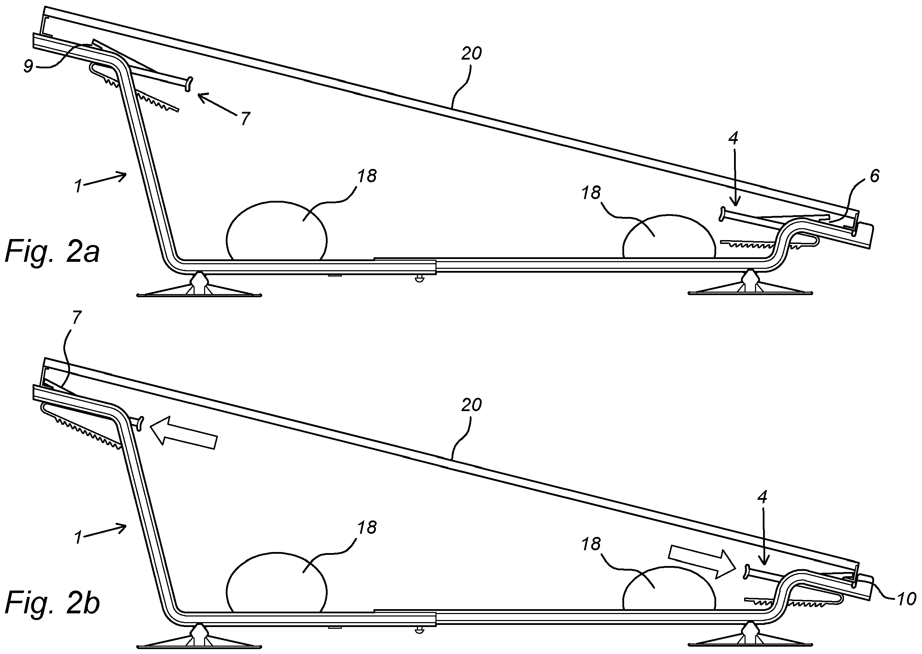

Figure 2a shows an assembly of a solar panel (20) and the support bracket (1) as shown in figures 1a and 1b in a first, not yet mutually connected, position. Figure 2b shows the assembly as shown in figure 2a wherein the support bracket (1) is clampingly connected to the solar panel (20). Figure 2b show that the clamping elements (4, 7) are displaced such that the first engaging surface (6) and the second engaging surface (9) engage respectively a first edge of the solar panel (20) and a second edge of the solar panel (20), in particular a first edge and second edge of the frame of the solar panel (20). The arrows in figure 2b indicate the direction of displacement of the clamping element (4, 7). Hence it can be seen that the clamping elements (4, 7) clampingly engage on the inner side of the frame of the solar panel (20). The first engaging surface (6) and the second engaging surface (9) face away from each other in mutually opposing directions, and engage an inward facing side of the first edge of the solar panel respectively an inward facing side of the second edge of the solar panel (20). At least part of the carrying surfaces (3) of the first end portion (5) and the second end portion (8) are substantially parallel to the surface area enclosed by the solar panel (20) facilitating support for the solar panel (20). The figures show that the frame (2) has a substantially U-shaped form, wherein the first end portion (5) is positioned closer to the mounting surface than the second end portion (8). The support bracket (1) and in particular the frame (2) thereof is additionally provided with a plurality ballast elements (18) providing further stability to the support bracket (1) and the assembly, in particular when experiencing pressure forces for example due to windy weather conditions.

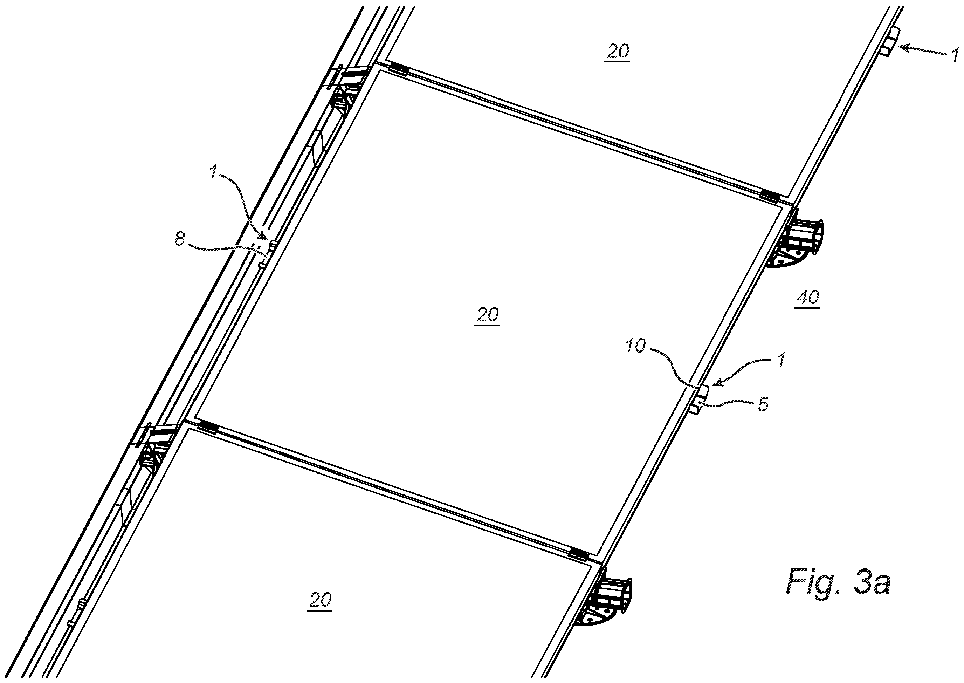

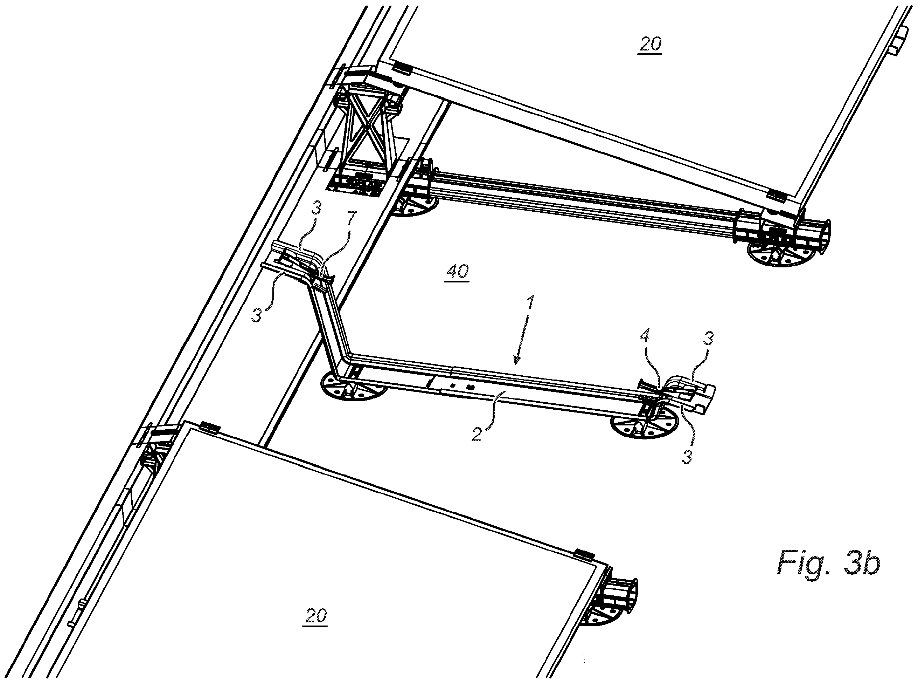

Figure 3a shows a perspective view of a support bracket (1) according to the invention positioned in a solar panel system wherein multiple solar panels (20) are mounted onto a mounting surface (40). Figure 3a shows only part of the first end portion (5) and the second end portion (8) of the frame (2). However, it is also conceivable that the second end portion (8) is fully covered by the solar panel (20) in a mounted position. It can be seen that the solar panel (20) is supported by the support bracket (1), wherein an outer edge of the solar panel (20) engages the abutment surface (10) of the support bracket (1). Figure 3b shows the assembly as shown in figure 3a, wherein the solar panel positioned on top of the support bracket (1) is left out, such that the positioning of the support bracket (1) with respect to the mounting surface (40) can be seen. The figure shows that the support bracket (1) is compatible with the conventional mounting system used in the solar panel system. Hence, in the shown embodiment, the support bracket (1) acts as additional support element.

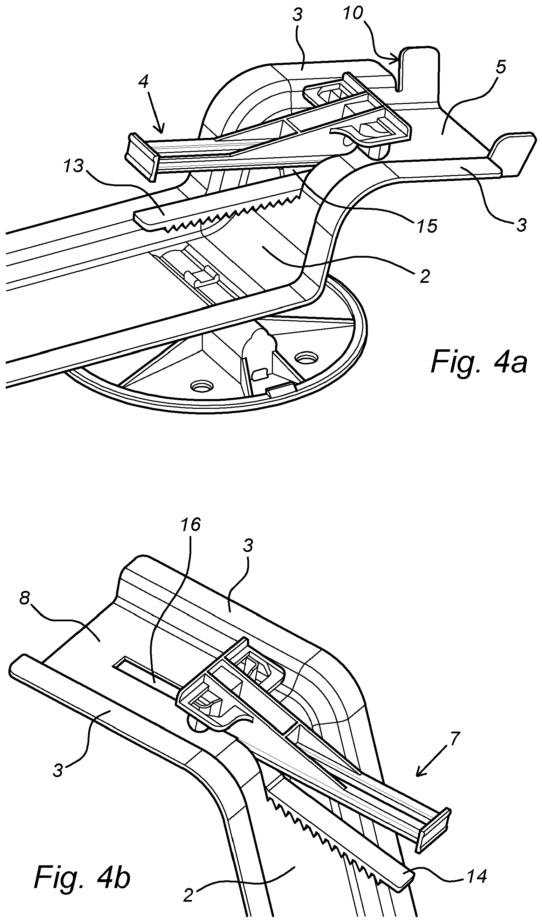

Figures 4a and 4b show the clamping elements (4, 7) according to the invention as shown in the previous figures in more detail. It can be seen that each clamping element (4, 7) is provided with an adjustable retention element (13, 14) for fixating the clamping element (4, 7) relative to the frame (2) in a number of different positions mutually shifted in the direction of elongation of the frame (2). Each retention element (13, 14) is resiliently connected to the clamping element (4, 7) for being resiliently pressed against a part of the frame (2). In the shown embodiment are the clamping elements (4, 7) resiliently pressed against a part of the frame (2) in a direction away from the clamping element (4, 7). In the shown embodiment are the first end portion (5) and the second end portion (8) provided with a substantially elongated slit extending (15, 16) in the direction of elongation of the frame. Each retention element (13, 14) comprises a toothed edge configured for engaging a part of the frame (2). The first clamping element (4) is partially received in the first said slit (15) and is guidable along said slit (15). The second clamping element (7) is partially received in the second slit (16) and is guidable along said slit (16). To this end, each clamping element (4, 7) is provided with two guiding grooves, positioned at opposing edges of the clamping element, which guiding grooves are configured to receive (accommodate) opposing side walls of a slit (15, 16) which allows the clamping element to be displaced in a linear and stable manner with respect to the slit (15, 16) and with respect to the frame (2). Each clamping element (4, 7) is configured for double-sided engagement of the frame (2), in particular an end portion (5, 8) thereof. The clamping elements (4, 7) typically comprise a receiving space for receiving at least part of the frame (2), in particular to enable double-sided engagement of the frame (2) in a relatively simple manner. The clamping element (4, 7) as shown in these figures benefit that they can be applied in a support bracket according to the present invention without using further mechanical fixing means.

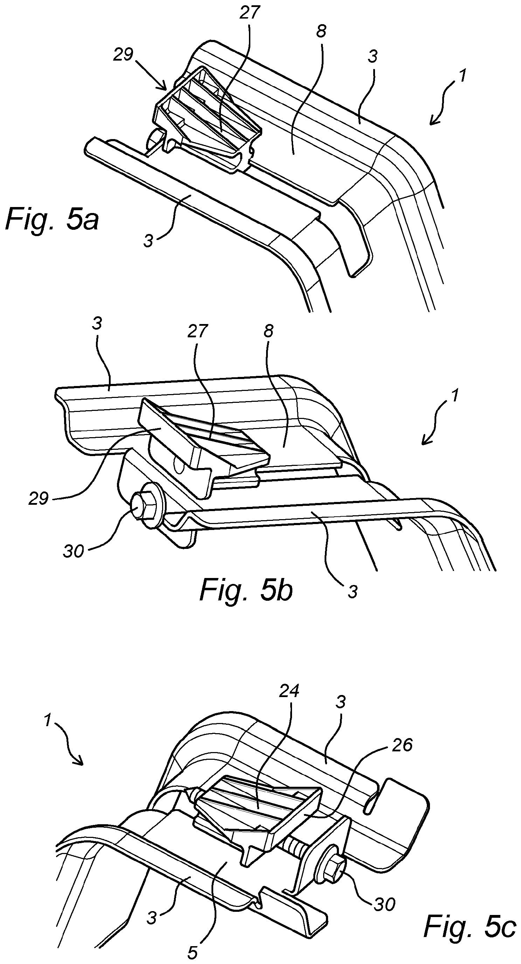

Figures 5a-c show further possible embodiments of a first clamping element (24) and a second clamping element (27) according to the present invention. The first clamping element (24) as shown in figure 5c is connected to the first end portion (5) of the frame (2) of the support bracket (1) via a screw connection (30). The second clamping element (27) is also connected to the second end portion (8) via a screw connection (30). The first clamping element (24) comprises a first engaging surface (26) for engaging on a first edge of the solar panel. The second clamping element (27) comprises a second engaging surface (29) for engaging a second edge of the solar panel opposing the first edge of the solar panel.

It is also conceivable that a solar panel support bracket is used wherein the first clamping element is a clamping element as shown in figures 4a and/or 4b, and wherein the second clamping element is a clamping element is a clamping element as shown in any of figures 5a-5c, or vice versa.

It will be apparent that the invention is not limited to the working examples shown and described herein, but that numerous variants are possible within the scope of the attached claims that will be obvious to a person skilled in the art.

Terms of relative position, such as "upper" and "lower", as used in this patent document are, for clarity reasons only, based on a conventional orientation of the assembly according to the invention when mounted onto a horizontal or diagonal (inclined) roof, regardless of the actual orientation of the assembly.

## Claims

1. Solar panel support bracket (1) for supporting a solar panel (20) on a substantially flat mounting surface, in particular a roof, comprising:
- an elongated frame (2) extending in a direction of elongation between a first end portion (5) and a second end portion (8) thereof, which frame is configured for transferring a part of the weight of the solar panel onto the mounting surface, and which frame comprises at least one carrying surface (3) for supporting at least a part of the solar panel,
- at least one first clamping element (4) connected to a first end portion of the frame, which first clamping element comprises a first engaging surface (6) for engaging on a first edge of the solar panel, and
- at least one second clamping element (7) connected to a second end portion of the frame, which second clamping element comprises a second engaging surface (9) for engaging a second edge of the solar panel opposing the first edge of the solar panel,
wherein the first clamping element and the second clamping element are displaceable relative to each other in the direction of elongation of the frame to adjust the distance between the first engaging surface and the second engaging surface, wherein the first engaging surface and the second engaging surface face away from each other in mutually opposing directions, for engaging an inward facing side of the first edge of the solar panel respectively an inward facing side of the second edge of the solar panel.

2. Support bracket according to claim 1, wherein the first end portion comprises an abutment surface (10) for being abutted against by the first edge of the solar panel, which abutment surface extends in a plane substantially perpendicular to the carrying surface and faces the first engaging surface of the first clamping element.

3. Support bracket according to any of the preceding claims, wherein at least one of the first clamping element and the second clamping element is provided with an adjustable retention element (13, 14) for fixating the clamping element relative to the frame in at least one position, and preferably a number of different positions mutually shifted in the direction of elongation of the frame.

4. Support bracket according to claim 3, wherein at least one of the first end portion and the second end portion is provided with a slit extending in the direction of elongation of the frame, and wherein at least one of the first clamping element and the second clamping element is partially received in said slit and guidable along said slit.

5. Support bracket according to claim 3 or 4, wherein the retention element is resiliently connected to the clamping element for being resiliently pressed against a part of the frame, preferably in a direction away from the clamping element.

6. Support bracket according to any of claims 3-5, wherein the retention element comprises a toothed edge configured for engaging a part of the frame.

7. Support bracket according to any of the preceding claims, wherein the support bracket comprises at least one support surface (11) for supporting the frame or the mounting surface, wherein the support surface is formed by a support member connected to the frame and configured for attachment to the mounting surface, and wherein the support member is moveable relative to the frame, preferably in at least a direction perpendicular to the direction of elongation of the frame.

8. Support bracket according to claim 7, wherein the first end portion, the second end portion, the at least one carrying surface and the at least one support surface form part of a single beam.

9. Support bracket according to claim 7 or 8, wherein the at least one carrying surface lies at an acute angle relative to the at least one support surface.

10. Support bracket according to any of the preceding claims, wherein the frame is extendable in its direction of elongation, wherein the distance between the first end portion of the frame and the second end portion of the frame is adjustable.

11. Support bracket according to any of the preceding claims, wherein the frame comprises at least one raised edge extending in the direction of elongation of the frame.

12. Method for supporting a solar panel with a support bracket according to any of the claims 1-11, comprising the steps of:
A) positioning the support bracket against the rear side of the solar panel, wherein the carrying surface of the elongated frame at least partly supports the solar panel,
B) displacing the first clamping element and/or the second clamping element relative to each other and/or relative to the frame up to a point where the first engaging surface engages on a first edge of the solar panel and the second engaging surface engages on a second edge of the solar panel opposing the first edge of the solar panel, and
C) optionally, positioning the solar panel with the support bracket onto a substantially flat mounting surface, in particular a roof.

13. Method according to claim 12, wherein during step B) the distance between the first engaging surface and the second engaging surface is increased.

14. Method according to claim 12 or 13, wherein during step A) the support bracket is positioned against the rear side of the solar panel such that an outward facing side of the first edge of the solar panel abuts an abutment surface provided on a first end portion of the frame.

## Patentansprüche

1. Solarpanel-Befestigungsbügel (1) zum Befestigen eines Solarpanels (20) auf einer im Wesentlichen ebenen Montagefläche, insbesondere einem Dach, umfassend:
- einen länglichen Rahmen (2), der sich in einer Erstreckungsrichtung zwischen einem ersten Endabschnitt (5) und einem zweiten Endabschnitt (8) davon erstreckt, wobei der Rahmen konfiguriert ist, um einen Teil des Gewichts des Solarpanels auf die Montagefläche zu übertragen, und wobei der Rahmen mindestens eine Tragfläche (3) zum Tragen mindestens eines Teils des Solarpanels umfasst,
- mindestens ein erstes Spannelement (4), das mit einem ersten Endabschnitt des Rahmens verbunden ist, wobei das erste Spannelement eine erste Eingriffsfläche (6) zum Eingreifen an einer ersten Kante des Solarpanels umfasst, und
- mindestens ein zweites Spannelement (7), das mit einem zweiten Endabschnitt des Rahmens verbunden ist, wobei das zweite Spannelement eine zweite Eingriffsfläche (9) zum Eingreifen an einer zweiten Kante des Solarpanels gegenüber der ersten Kante des Solarpanels umfasst,
wobei das erste Spannelement und das zweite Spannelement in Bezug aufeinander in der Längsrichtung des Rahmens verschiebbar sind, um den Abstand zwischen der ersten Eingriffsfläche und der zweiten Eingriffsfläche einzustellen, wobei die erste Eingriffsfläche und die zweite Eingriffsfläche in einander entgegengesetzten Richtungen voneinander weg weisen, um eine nach innen weisende Seite der ersten Kante des Solarpanels bzw. eine nach innen weisende Seite der zweiten Kante des Solarpanels einzugreifen.

2. Befestigungsbügel nach Anspruch 1, wobei der erste Endabschnitt eine Anlagefläche (10) zum Anliegen an der ersten Kante des Solarpanels umfasst, wobei sich die Anlagefläche in einer Ebene erstreckt, die im Wesentlichen senkrecht zu der Tragfläche ist und der ersten Eingriffsfläche des ersten Spannelements zugewandt ist.

3. Befestigungsbügel nach einem der vorherigen Ansprüche, wobei zumindest eines von dem ersten Spannelement und dem zweiten Spannelement mit einem einstellbaren Halteelement (13, 14) versehen ist, um das Spannelement in Bezug auf den Rahmen an zumindest einer Position und vorzugsweise einer Anzahl unterschiedlicher Positionen, die in der Längsrichtung des Rahmens gegeneinander verschoben sind, zu fixieren.

4. Befestigungsbügel nach Anspruch 3, wobei mindestens einer von dem ersten Endabschnitt und dem zweiten Endabschnitt mit einem Schlitz versehen ist, der sich in der Erstreckungsrichtung des Rahmens erstreckt, und wobei mindestens eines von dem ersten Spannelement und dem zweiten Spannelement teilweise in dem Schlitz aufgenommen und entlang des Schlitzes führbar ist.

5. Befestigungsbügel nach Anspruch 3 oder 4, wobei das Halteelement elastisch mit dem Spannelement verbunden ist, um elastisch gegen einen Teil des Rahmens gedrückt zu werden, vorzugsweise in einer Richtung weg von dem Spannelement.

6. Befestigungsbügel nach einem der Ansprüche 3-5, wobei das Halteelement eine gezahnte Kante umfasst, die zum Eingreifen in einen Teil des Rahmens konfiguriert ist.

7. Befestigungsbügel nach einem der vorherigen Ansprüche, wobei der Befestigungsbügel mindestens eine Befestigungsfläche (11) zum Befestigen des Rahmens auf der Montagefläche umfasst, wobei die Montagefläche durch ein Befestigungselement gebildet ist, das mit dem Rahmen verbunden und zum Befestigung an der Befestigungsfläche konfiguriert ist, und wobei das Befestigungselement in Bezug auf den Rahmen beweglich ist, vorzugsweise in mindestens einer Richtung senkrecht zu der Erstreckungsrichtung des Rahmens.

8. Befestigungsbügel nach Anspruch 7, wobei der erste Endabschnitt, der zweite Endabschnitt, die mindestens eine Tragfläche und die mindestens eine Befestigungsfläche Teil eines einzelnen Trägers sind.

9. Befestigungsbügel nach Anspruch 7 oder 8, wobei die mindestens eine Tragfläche in einem spitzen Winkel in Bezug auf die mindestens eine Befestigungsfläche liegt.

10. Befestigungsbügel nach einem der vorherigen Ansprüche, wobei der Rahmen in seiner Erstreckungsrichtung erweiterbar ist, wobei der Abstand zwischen dem ersten Endabschnitt des Rahmens und dem zweiten Endabschnitt des Rahmens einstellbar ist.

11. Befestigungsbügel nach einem der vorherigen Ansprüche, wobei der Rahmen mindestens eine erhabene Kante umfasst, die sich in der Erstreckungsrichtung des Rahmens erstreckt.

12. Verfahren zum Befestigen eines Solarpanels mit einem Befestigungsbügel nach einem der Ansprüche 1-11, umfassend die folgenden Schritte:
A) Positionieren des Befestigungsbügels gegen die Rückseite des Solarpanels, wobei die Tragfläche des länglichen Rahmens das Solarpanel zumindest teilweise befestigt,
B) Verschieben des ersten Spannelements und/oder des zweiten Spannelements in Bezug aufeinander und/oder in Bezug auf den Rahmen bis zu einem Punkt, an dem die erste Eingriffsfläche an einer ersten Kante des Solarpanels eingreift und die zweite Eingriffsfläche an einer zweiten Kante des Solarpanels gegenüber der ersten Kante des Solarpanels eingreift, und
C) optional Positionieren des Solarpanels mit dem Befestigungsbügel auf einer im Wesentlichen ebenen Montagefläche, insbesondere einem Dach.

13. Verfahren nach Anspruch 12, wobei der Abstand zwischen der ersten Eingriffsfläche und der zweiten Eingriffsfläche während Schritt B) vergrößert wird.

14. Verfahren nach Anspruch 12 oder 13, wobei während Schritt A) der Befestigungsbügel derart gegen die Rückseite des Solarpanels positioniert wird, dass eine nach außen weisende Seite der ersten Kante des Solarpanels an einer Anlagefläche anliegt, die an einem ersten Endabschnitt des Rahmens bereitgestellt ist.

## Revendications

1. Étrier de support de panneau solaire (1) pour supporter un panneau solaire (20) sur une surface de montage sensiblement plane, en particulier un toit, comprenant :
- un cadre allongé (2) s'étendant dans une direction d'allongement entre une première portion d'extrémité (5) et une seconde portion d'extrémité (8) de celui-ci, cadre qui est configuré pour transférer une partie du poids du panneau solaire sur la surface de montage, et cadre qui comprend au moins une surface porteuse (3) pour supporter au moins une partie du panneau solaire,
- au moins un premier élément de serrage (4) relié à une première portion d'extrémité du cadre, premier élément de serrage qui comprend une première surface d'engagement (6) pour s'engager sur un premier bord du panneau solaire, et
- au moins un second élément de serrage (7) relié à une seconde portion d'extrémité du cadre, second élément de serrage qui comprend une seconde surface d'engagement (9) pour engager un second bord du panneau solaire opposé au premier bord du panneau solaire,
dans lequel le premier élément de serrage et le second élément de serrage sont déplaçables l'un par rapport à l'autre dans la direction d'allongement du cadre pour ajuster la distance entre la première surface d'engagement et la seconde surface d'engagement, dans lequel la première surface d'engagement et la seconde surface d'engagement sont opposées l'une à l'autre dans des directions mutuellement opposées, pour engager un côté orienté vers l'intérieur du premier bord du panneau solaire respectivement un côté orienté vers l'intérieur du second bord du panneau solaire.

2. Étrier de support selon la revendication 1, dans lequel la première portion d'extrémité comprend une surface de butée (10) pour être en butée contre le premier bord du panneau solaire, surface de butée qui s'étend dans un plan sensiblement perpendiculaire à la surface porteuse et fait face à la première surface d'engagement du premier élément de serrage.

3. Étrier de support selon l'une quelconque des revendications précédentes, dans lequel au moins l'un du premier élément de serrage et du second élément de serrage est pourvu d'un élément de retenue ajustable (13, 14) pour fixer l'élément de serrage par rapport au cadre dans au moins une position, et de préférence un nombre de positions différentes décalées mutuellement dans la direction d'allongement du cadre.

4. Étrier de support selon la revendication 3, dans lequel au moins l'une de la première portion d'extrémité et de la seconde portion d'extrémité est pourvue d'une fente s'étendant dans la direction d'allongement du cadre, et dans lequel au moins l'un du premier élément de serrage et du second élément de serrage est partiellement reçu dans ladite fente et guidable le long de ladite fente.

5. Étrier de support selon la revendication 3 ou 4, dans lequel l'élément de retenue est relié élastiquement à l'élément de serrage pour être pressé élastiquement contre une partie du cadre, de préférence dans une direction opposée à l'élément de serrage.

6. Étrier de support selon l'une quelconque des revendications 3 à 5, dans lequel l'élément de retenue comprend un bord denté configuré pour engager une partie du cadre.

7. Étrier de support selon l'une quelconque des revendications précédentes, dans lequel l'étrier de support comprend au moins une surface de support (11) pour supporter le cadre sur la surface de montage, dans lequel la surface de support est formée par un élément de support relié au cadre et configuré pour être fixé à la surface de montage, et dans lequel l'élément de support est mobile par rapport au cadre, de préférence dans au moins une direction perpendiculaire à la direction d'allongement du cadre.

8. Étrier de support selon la revendication 7, dans lequel la première portion d'extrémité, la seconde portion d'extrémité, l'au moins une surface porteuse et l'au moins une surface de support font partie d'une seule poutre.

9. Étrier de support selon la revendication 7 ou 8, dans lequel l'au moins une surface porteuse est située à un angle aigu par rapport à l'au moins une surface de support.

10. Étrier de support selon l'une quelconque des revendications précédentes, dans lequel le cadre est extensible dans sa direction d'allongement, dans lequel la distance entre la première portion d'extrémité du cadre et la seconde portion d'extrémité du cadre est ajustable.

11. Étrier de support selon l'une quelconque des revendications précédentes, dans lequel le cadre comprend au moins un bord surélevé s'étendant dans la direction d'allongement du cadre.

12. Procédé de support d'un panneau solaire avec un étrier de support selon l'une quelconque des revendications 1 à 11, comprenant les étapes consistant à :
A) positionner l'étrier de support contre le côté arrière du panneau solaire, dans lequel la surface porteuse du cadre allongé supporte au moins partiellement le panneau solaire,
B) déplacer le premier élément de serrage et/ou le second élément de serrage l'un par rapport à l'autre et/ou par rapport au cadre jusqu'à un point où la première surface d'engagement s'engage sur un premier bord du panneau solaire et la seconde surface d'engagement s'engage sur un second bord du panneau solaire opposé au premier bord du panneau solaire, et
C) facultativement, positionner le panneau solaire avec l'étrier de support sur une surface de montage sensiblement plane, en particulier un toit.

13. Procédé selon la revendication 12, dans lequel au cours de l'étape B) la distance entre la première surface d'engagement et la seconde surface d'engagement est augmentée.

14. Procédé selon la revendication 12 ou 13, dans lequel au cours de l'étape A), l'étrier de support est positionné contre le côté arrière du panneau solaire de sorte qu'un côté orienté vers l'extérieur du premier bord du panneau solaire vienne en butée contre une surface de butée prévue sur une première portion d'extrémité du cadre.
